# EUROPÄISCHE PATENTSCHRIFT

(11) **EP 3 423 344 B1**
(45) Veröffentlichungstag und Bekanntmachung des Hinweises auf die Patenterteilung: **26.02.2020**
(21) Anmeldenummer: 17712424.5
(22) Anmeldetag: 03.03.2017
(51) Int. Cl.: B63B 27/36, B63B 27/10, B63B 27/16, B66C 13/02, B66C 23/26, B66C 23/20

(54) **SYSTEM ZUM AUSBRINGEN UND BERGEN EINES UNTERWASSERFAHRZEUGS**
SYSTEM FOR DEPLOYING AND RECOVERING AN UNDERWATER VEHICLE
SYSTÈME POUR DÉPLOYER ET ABRITER UN SUBMERSIBLE

(30) Priorität: 04.03.2016 DE 202016101197 U
(43) Veröffentlichungstag der Anmeldung: 09.01.2019
(73) Patentinhaber: Fraunhofer-Gesellschaft zur Förderung der angewandten Forschung e.V., 80686 München (DE)
(72) Erfinder: PFÜTZENREUTER, Torsten, 98704 Langewiesen (DE); RAUSCHENBACH, Thomas, 98693 Ilmenau (DE); BRINK, Gunnar, 76227 Karlsruhe (DE)
(74) Vertreter: Wasiljeff, Johannes M.B.
(86) Internationale Anmeldenummer: PCT/EP2017/055101
(87) Internationale Veröffentlichungsnummer: WO 2017/149155

(56) Entgegenhaltungen:
- EP-A1- 2 196 427
- WO-A1-2013/014620
- DE-A1-102011 002 108
- KR-A- 20120 111 447
- US-B1- 8 591 161

## Beschreibung

Die Erfindung betrifft gemäß dem Oberbegriff von Anspruch 1 ein System zum Ausbringen und Bergen eines Unterwasserfahrzeugs, das einen Kran und einen Lagerplatz für wenigstens ein Unterwasserfahrzeug umfasst.

Herkömmlicherweise werden Unterwasserfahrzeuge, insbesondere autonome Unterwasserfahrzeuge, von einem Mutterschiff in das Meerwasser ausgebracht und nach Vollendung einer autonom durchgeführten Mission wieder geborgen, d.h. an Bord des Mutterschiffs verbracht.

Derartige Missionen können viele Stunden oder Tage andauern. Während dieser Zeit können Wetterverschlechterungen auftreten. Besonders problematisch ist es, wenn der Seegang und die Wellenhöhe zunehmen. Regelmäßig ist nämlich das Mutterschiff wesentlich größer als das Unterwasserfahrzeug. Dies führt dazu, dass bedingt durch den Seegang bzw. Wellen und Wind das Unterwasserfahrzeug eine dreidimensionale Relativbewegung zum Mutterschiff durchführt. Diese Relativbewegungen können jedoch regelmäßig nicht durch die Antriebe des Unterwasserfahrzeugs ausgeglichen werden, wenn die Wellenhöhe zu hoch, der Wind zu stark und/oder Rollbewegungen des Mutterschiffs zu groß geworden sind.

In einem derartigen Fall bleibt der Besatzung des Mutterschiffs regelmäßig nichts anderes übrig, als zu warten, bis sich die Seewetterbedingungen wieder verbessert haben.

Nachteilig an dieser Vorgehensweise sind die sehr hohen Kosten, die täglich bzw. stündlich mit dem Betrieb des Mutterschiffs anfallen.

Ein weiterer Nachteil herkömmlicher Systeme für die Durchführung von Missionen mit autonomen Unterwasserfahrzeugen liegt darin, dass die Batteriekapazitäten derartiger Unterwasserfahrzeuge begrenzt sind und zudem oftmals nach Durchführung einer Mission Wartungsarbeiten am Unterwasserfahrzeug erforderlich sind. Auch das Auslesen von Daten, die während einer Mission gewonnen wurden, kann sehr lange dauern. Auch hieraus ergeben sich substanzielle Wartezeiten, bis eine weitere Mission durchgeführt werden kann. Diese Wartezeiten sind ebenfalls mit hohen Kosten verbunden.

Gemäß US 5,253,605 wird ein System zum Ausbringen und Bergen eines Unterwasserfahrzeugs in einem Container vorgeschlagen, der achtern an Deck eines Schiffes befestigt ist. Zum Ausbringen und Bergen des Unterwasserfahrzeugs wird über die dem Heck des Mutterschiffes zugewandte Stirnseite des Containers ein Kranarm ausgefahren. Dieser Kranarm ist im Inneren des Containers und zwar im Deckenbereich des Containers angeordnet. Aufgrund der beengten Verhältnisse im Container sowie der Anordnung dieses Krans in diesem Container verbleibt wenig Raum für das hierin unterzubringende Unterwasserfahrzeug. Es ist daher lediglich die Unterbringung eines einzigen Unterwasserfahrzeugs in dem Container vorgesehen. Wenn bei einem derartigen System die Batterie des Unterwasserfahrzeugs erschöpft ist, muss das Unterwasserfahrzeug zunächst geborgen und die Batterie wieder aufgeladen werden, bevor eine Mission fortgesetzt bzw. eine neue Mission begonnen werden kann. Dies ist jedoch zeitaufwändig und daher Kosten treibend.

Ferner ist der Kran in seinem Aktionsgebiet auf das Heck des Mutterschiffes beschränkt. Eine wahlweise Ausbringung des Unterwasserfahrzeugs bzw. seine Bergung zusätzlich auch an der Steuerbordseite oder Backbordseite des Mutterschiffes ist nicht möglich. Je nach Wellengang und Windrichtung gebietet sich oftmals jedoch ein Ausbringen bzw. Einholen eines Unterwasserfahrzeugs nicht über die Heckseite des Schiffes, sondern über die Steuerbordseite oder Backbordseite. In einem solchen Fall wäre das gesamte Mutterschiff zu drehen, was je nach Manövrierfähigkeit des Mutterschiffes aufwändig und Zeit raubend sein kann. Letztlich führt daher eine derartige Ausbildung zu einer Verlängerung der Einsatzdauer des Mutterschiffes und somit zu erhöhten Kosten.

DE 10 2013 207 731 A1 zeigt ein System zum Einholen eines Unterwasserfahrzeugs. In einer Alternative dieses Systems ist eine Basisstation zum Aufnehmen des Unterwasserfahrzeugs nicht fest installiert, sondern als mobile Basisstation in Form einer Containereinheit vorgesehen. Zum Einholen des Unterwasserfahrzeugs wird jedoch ein Bordkran verwendet. Nachteilig an diesem System ist, dass das Mutterschiff einen Bordkran voraussetzt, so dass dieses System auf kranlosen Schiffen nicht verwendet werden kann. Daher kommen für dieses System lediglich Schiffe mit Bordkran in Betracht. Dies ist nachteilig, da hierdurch die Auswahl an verfügbaren Mutterschiffen begrenzt ist. Zudem ist dies nachteilig, da Schiffe mit eigenem Bordkran regelmäßig größer ausgebildet und daher mit höheren Kosten verbunden sind. Nachteilig an diesem System ist zudem, dass der Bordkran nicht flexibel positioniert werden kann, so dass die Einsatzmöglichkeiten des Systems beschränkt sind.

Container mit fest installierten elektrischen Apparaturen, insbesondere einer Sendeanlage sind aus DE 2 043 516 A bekannt. Sie sind jedoch ungeeignet zum Ausbringen und Bergen von Unterwasserfahrzeugen.

Ein weiteres System zum Bergen eines Unterwasserfahrzeugs ist in DE 100 45 911 B4 gezeigt. Dieses System ist zum Bergen auch unter schwierigen Bedingungen vorgesehen. Hierzu wird ein schwimmendes Netz als Fanggerät eingesetzt, welches zum Verhaken mit einem vom Unterwasserfahrzeug nach oben frei abstehenden Fanghaken dient. Das Unterwasserfahrzeug kann somit auch bei schwierigen Seebedingungen unter diesem schwimmenden Netz auftauchen, so dass sich sein Fanghaken in den Maschen des Netzes verfängt. Anschließend kann über die auf diese Weise hergestellte Verbindung zwischen Mutterschiff und Unterwasserfahrzeug das Unterwasserfahrzeug mithilfe eines auf dem Mutterschiff befestigten Hebezeugs mit einem teleskopisch ausgebildeten Ausleger an Bord des Mutterschiffs gehoben werden. Eine flexible Positionierung dieses Hebezeugs ist jedoch nicht vorgesehen. Das Bergen des Unterwasserfahrzeugs kann daher nur an der Stelle des Mutterschiffs durchgeführt werden, an der das Hebezeug befestigt ist. Zum Ausbringen eines Unterwasserfahrzeugs ist dieses Netz jedoch nicht geeignet, da das Unterwasserfahrzeug aufgrund der Verhakung des Fanghakens mit dem Netz nicht automatisch, sondern lediglich manuell freigegeben werden kann. Hierzu müsste jedoch zunächst ein Taucher in den Bereich der Verhakung des Fanghakens mit dem Netz gebracht werden, was nicht nur gefährlich, sondern auch zeitaufwändig und damit kostenintensiv ist.

Der Erfindung liegt nach alledem die Aufgabe zu Grunde, die mit der Durchführung von Missionen mit Unterwasserfahrzeugen verbundenen Kosten zu reduzieren.

Die Erfindung löst diese Aufgabe mit einem System zum Ausbringen und Bergen eines Unterwasserfahrzeugs mit den Merkmalen von Anspruch 1.

Das erfindungsgemäße System sieht dazu einen Kran vor, der an einem Boden eines ersten Containers befestigt ist sowie einen Lagerplatz für wenigstens ein Unterwasserfahrzeug, der in einem zweiten Container bereitgestellt ist. Dabei ist der erste Container zumindest während eines Ausbringvorgangs oder eines Bergevorgangs, vorzugsweise aber während der gesamten Dauer einer Mission, auf dem zweiten Container angeordnet.

Durch diese Anordnung eines einen Kran beinhaltenden Containers auf einem weiteren, ein oder mehrere Unterwasserfahrzeuge beinhaltenden Containers ist eine sehr Raum sparende Systemkonfiguration möglich. Durch die vertikale Anordnung des den Kran beinhaltenden Containers über dem den Lagerraum für das oder die Unterwasserfahrzeuge beinhaltenden Container kann die Stellfläche auf dem Mutterschiff sehr gering gehalten werden. Somit kann ein kleineres und damit kostengünstigeres Mutterschiff gewählt werden.

Zugleich führt die Trennung von Kran und dem oder den Unterwasserfahrzeugen, d.h. die Anordnung des Krans in einem anderen Container als demjenigen, in dem das oder die Unterwasserfahrzeugen untergebracht sind, zu einer Erhöhung des verfügbaren Raumes im zweiten Container, der als Lagerplatz für das oder die Unterwasserfahrzeuge vorgesehen ist. Dies erleichtert die Unterbringung mehrerer Unterwasserfahrzeuge in diesem Container, so dass die Mitführung mehrerer Unterwasserfahrzeuge erleichtert wird. Dies ist wiederum vorteilhaft, da durch den abwechselnden Einsatz mehrerer Unterwasserfahrzeuge ein im Wesentlichen fortlaufender Missionsbetrieb möglich ist, auch wenn ein Unterwasserfahrzeug gewartet, sein Datenspeicher ausgelesen oder ausgetauscht oder seine Batterie aufgeladen werden muss.

Die eingesparte Stellfläche kann aber auch ganz oder teilweise für andere Gerätschaften zur Verfügung gestellt werden. Beispielsweise können statt einem mehrere Unterwasserfahrzeuge an Bord des Mutterschiffes genommen werden. Mehrere Unterwasserfahrzeuge können sich dann während mehrerer Missionen entweder abwechseln oder sie können für mehrere gleichzeitig durchgeführte Missionen herangezogen werden. Somit verkürzt sich die Fahrtdauer des Mutterschiffs, wenn mehrere vorgegebene Aufgaben, z.B. Erkundungsfahrten, gleichzeitig bzw. mehrere nacheinander durchzuführende Missionen von Unterwasserfahrzeugen ohne Wartezeiten zwischen den einzelnen Missionen durchgeführt werden können.

Zudem ermöglicht die Erfindung, den zum Ausbringen und Bergen eines Unterwasserfahrzeugs erforderlichen Kran transportabel bereitzustellen. D.h., es kann auch ein Mutterschiff ohne bordeigenen Kran verwendet werden, da der Kran mobil im Container bereitgestellt wird. Hierdurch können auch einfache Schiffe als Mutterschiff herangezogen werden, die nicht primär für die Durchführung von Missionen mit Unterwasserfahrzeugen gebaut worden sind. Derartige Schiffe benötigen lediglich einen Stellplatz für einen Container.

Ferner ermöglicht die Systemkonfiguration mit einem in einem oberen Container angeordneten Kran, den Kran an verschiedenen Positionen an Deck eines Schiffes aufzustellen. Bei fest installierten Kränen kann ein Unterwasserfahrzeug immer nur von ein und derselben Position ins Seewasser verbracht werden. Demgegenüber erlaubt die erfindungsgemäße Systemkonfiguration, den Kran beispielsweise auf der Steuerbord- oder der Backbordseite oder am Heck des Schiffes aufzustellen. Dadurch bleibt die Flexibilität des Mutterschiffes für verschiedene Einsatzzwecke erhalten. Beispielsweise erlaubt das erfindungsgemäße System auch die Durchführung von Missionen mit Unterwasserfahrzeugen auf reinen Containerschiffen, die nicht über einen eigenen Bordkran verfügen.

Beispielsweise kann eine Mission so geplant werden, dass ein oder mehrere Unterwasserfahrzeuge während der Fahrt des Mutterschiffs in die See ausgebracht werden. Hierzu eignet sich besonders vorteilhaft eine Position des Krans am Heck eines Schiffes, da somit die Gefahr einer Kollision des Unterwasserfahrzeugs mit dem Mutterschiff besonders gering ist. Insbesondere spielen bei einer derartigen Ausbringposition Rollbewegungen des Mutterschiffs nur eine geringe Rolle, während bei einer seitlichen Ausbringung des Unterwasserfahrzeugs, d.h. auf der Steuerbord- oder der Backbordseite, Rollbewegungen des Mutterschiffs mit einer erhöhten Kollisionsgefahr zwischen Mutterschiff und Unterwasserfahrzeug einhergehen. Somit ermöglicht die Erfindung auch eine Ausbringung eines Unterwasserfahrzeugs bei stärkerem Seegang. Somit können insbesondere dann Missionen trotz starkem Seegang gestartet werden, wenn absehbar ist, dass gegen Ende der Mission eine Seewetterberuhigung stattgefunden haben wird.

Die Erfindung erlaubt somit eine Positionierung eines mobilen Kransystems an jeweils für eine Mission idealer Stelle.

Gemäß einer Weiterbildung der Erfindung weist der obere, den Kran beinhaltenden erste Container Seitenwandelemente auf, die mit den übrigen Teilen dieses Containers lösbar befestigt und dadurch demontierbar und wieder montierbar sind. Die dadurch bedingte Entfernbarkeit von Seitenwandteilen ermöglicht, dass der Kranausleger eine umfassende Bewegungsfreiheit hat. Insbesondere werden bei der Demontage der Seitenwandelemente zugleich auch Ecksäulen des Containers entfernt. Diese Ecksäulen stehen entweder selbstständig auf Eckbeschlägen des Containers oder sind in Seitenwandelementen integriert.

Gemäß einer weiteren Weiterbildung der Erfindung weist der erste Container wenigstens ein Dachelement auf, das mit dem übrigen Teil des Containers lösbar befestigt und dadurch demontierbar und wieder montierbar ist. Somit kann wenigstens ein Teil des Daches des oberen Containers ebenfalls entfernt werden, was die Bewegungsfreiheit des Krans, insbesondere des Kranauslegers auch in vertikaler Richtung vergrößert.

Insgesamt ergibt sich somit die Möglichkeit, dass der im ersten Container untergebrachte Kran nahezu frei auf dem zweiten, ein oder mehrere Unterwasserfahrzeuge beinhaltende Container steht und dem Kran somit eine erhebliche Bewegungsfreiheit zugute kommt.

Gemäß einer weiteren Weiterbildung der Erfindung weist der Kran einen Ausleger mit mehreren teleskopartig miteinander zusammen wirkenden Teleskopelementen auf. Diese Teleskopelemente sind ein- und ausfahrbar, wodurch die horizontale Reichweite des Krans signifikant erhöht wird. Eine derartige Reichweitenerhöhung ist vorteilhaft, da eine große Reichweite des Kranauslegers einen Betrieb des Krans, insbesondere während des Ausbringens oder Bergens eines Unterwasserfahrzeugs auch bei stärkeren Roll- oder Stampfbewegungen des Mutterschiffes zulässt. Zudem ermöglicht ein derartiger teleskopartiger Aufbau des Kranauslegers einen geringen Raumbedarf bei eingefahrenem Zustand des Auslegers und somit einen geringen Stauraum, wenn der Kran nicht benötigt wird. Dieser Aufbau ermöglicht es somit, einen vergleichsweise großen Kranausleger in einem relativ zur Größe des Kranauslegers kleinen Container unterzubringen. Dieser Aufbau ist daher ebenfalls vorteilhaft, da er den Raumbedarf eines großen Krans verringert. Da somit auch die Stellfläche trotz eines großen Krans gering bleibt, kann ein kleineres Mutterschiff betrieben und/oder das Mutterschiff mit weiteren Aufgaben betraut und damit insgesamt die mit dem Mutterschiff verbundenen Kosten reduziert werden.

Eine Weiterbildung der Erfindung sieht vor, dass der Teil des ersten Containers, der nach dem Demontieren der demontierbaren Seitenwand- und Dachelemente zumindest teilweise umschlossen verbleibt, als Lagerraum für die demontierten Seitenwand- und Dachelemente und/oder als Kontrollraum für die Steuerung des Krans und/oder einer Mission eines Unterwasserfahrzeugs hergerichtet ist. Diese Konstruktion erlaubt eine vorteilhafte Platz sparende Unterbringung der demontierten Elemente, die somit nicht an oder unter Deck des Mutterschiffs aufbewahrt werden müssen. Zudem ist diese Konstruktion vorteilhaft, da der Kontrollraum somit eine erhöhte Position einnimmt und somit einer Bedienperson eine nahezu ungehinderte Sicht über die Bordwand des Mutterschiffs erlaubt.

Gemäß einer Weiterbildung der Erfindung sind am zweiten, unteren Container außen angebrachte Leitersprossen vorgesehen. Diese Leitersprossen sind vorteilhaft, um einer Bedienperson einen Zugang von der Deckebene über den unteren, zweiten Container auf die Plattform des Krans, d.h. die Bodenebene des oberen, ersten Containers, zu ermöglichen.

Eine weitere Weiterbildung der Erfindung sieht vor, dass der zweite, untere Container einen oder mehrere in Längsrichtung des zweiten Containers horizontal verschiebliche Auszüge mit je einer Aufnahmeeinrichtung zum Aufnehmen eines Unterwasserfahrzeugs aufweist. Auf diese Weise kann durch Herausziehen bzw. Herausfahren eines Auszugs ein Unterwasserfahrzeug vor die Stirnwand des zweiten, unteren Containers bereitgestellt werden. Der oberhalb angeordnete Kran kann somit auf ideale Weise das Unterwasserfahrzeug aufnehmen und durch Verschwenken des Auslegers über die Bordwand des Mutterschiffs hinweg zu Wasser lassen.

Gemäß einer weiteren Weiterbildung der Erfindung sind wenigstens zwei übereinander angeordnete Auszüge für mehrere, insbesondere zwei oder vier Unterwasserfahrzeuge vorgesehen. Dank einer derartigen Anordnung kann weiter Platz gespart werden, wenn mehrere Unterwasserfahrzeuge an Bord des Mutterschiffs untergebracht werden sollen.

Gemäß einer weiteren Weiterbildung der Erfindung weist der zweite Container einen ersten Bereich zur Aufnahme des bzw. der mehreren Unterwasserfahrzeuge auf, der benachbart zu einer stirnseitigen, insbesondere doppelflügeligen, Containertür angeordnet ist. Ferner weist der zweite Container vorteilhafterweise einen zweiten Bereich auf, der zur Lagerung von Zubehör und Austauschteilen des oder der Unterwasserfahrzeuge hergerichtet ist, insbesondere für die Lagerung von Antriebsbatterien, Batterieladegerätschaften und Datenspeicherbaugruppen. Diese Ausbildung erlaubt eine optimale Ausnutzung des zur Verfügung stehenden Raumes.

Eine weitere Weiterbildung der Erfindung sieht vor, dass der erste und der zweite Container als Standardcontainer mit Eckbeschlägen ausgebildete Seecontainer, d.h. ISO-Container, sind. Diese Ausbildung ist vorteilhaft, da für derartige standardisierte Container Standard-Transportmittel, insbesondere Lkw-Trailer, Containerbrücken und Containerstellplätze, insbesondere an Bord von Schiffen zur Verfügung stehen. Somit kann auf kostengünstige Standard-Baugruppen etc. zurückgegriffen werden.

Gemäß einer weiteren Weiterbildung der Erfindung weist der erste, den Kran beherbergende Container eine derart verstärkte Bodenbaugruppe auf, welche die beim Ausbringen und Bergen eines Unterwasserfahrzeugs vom Fuß des Krans auf die Bodenbaugruppe ausgeübten Kräfte und Momente auf die bodenseitigen Eckbeschläge des ersten Containers überträgt. Insbesondere bei Seegang und/oder Rollbewegungen des Mutterschiffs können beim Ausbringen und Bergen eines Unterwasserfahrzeugs bei seitlich ausgeschwenktem Kranausleger erhebliche Kräfte und Momente auf die Bodenbaugruppe des oberen Containers ausgeübt werden. Diese Kräfte und Momente müssen auf das Mutterschiff übertragen werden, damit der obere Container an Ort und Stelle verbleibt. Über die bodenseitigen Eckbeschläge des oberen Containers werden diese Kräfte und Momente auf den unteren Container und über Ecksäulen des unteren Containers auf das Deck des Mutterschiffs übertragen. Hierzu sind entsprechende Verriegelungselemente und Zurrstangen vorgesehen, wie sie standardmäßig in der Containerschifffahrt eingesetzt werden. Das Zurückgreifen auf derartige Standardkomponenten ermöglicht ein kostengünstiges System zum Ausbringen und Bergen von Unterwasserfahrzeugen.

Weitere Ausführungsformen der Erfindung ergeben sich aus den Ansprüchen sowie aus den anhand der Zeichnung näher erläuterten Ausführungsbeispielen. In der Zeichnung zeigen:
- Fig. 1: ein erfindungsgemäßes System zum Ausbringen und Bergen von Unterwasserfahrzeugen,
- Fig. 2: das System gemäß Fig. 1 in einem Zustand während eines Ausbringens eines Unterwasserfahrzeugs und
- Fig. 3: das System gemäß Figuren 1 und 2 in einem Zustand kurz bevor das Unterwasserfahrzeug zu Wasser gelassen wird.

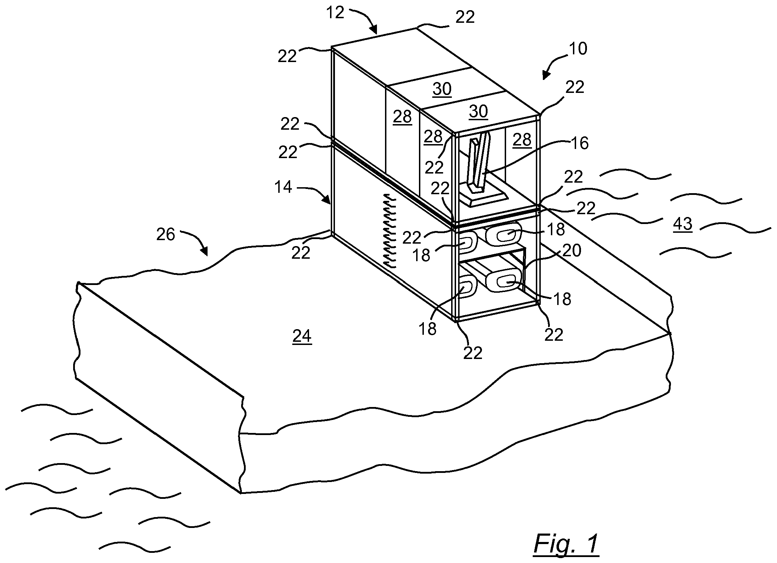

Fig. 1 zeigt ein erfindungsgemäßes System 10, welches zwei Seecontainer umfasst, nämlich einen ersten, oberen Container 12 sowie einen zweiten, unteren Container 14. Der obere Container 12 beherbergt einen Kran 16. Der untere Container 14 beherbergt ein oder mehrere Unterwasserfahrzeuge 18, insbesondere autonome Unterwasserfahrzeuge (AUV: autonomous underwater vehicle), d.h. Unterwasserfahrzeuge, die über mehrere Stunden oder Tage autonom operieren können und wie sie beispielsweise bei der Vorbereitung der Verlegung von Tiefseekabeln oder der Inspektion von Tiefseekabeln, zur Vermessung des Meeresbodens, zur Sicherung von Seestraßen, von der Küstenwache für Sicherheitszwecke, im Tiefsee-Bergbau oder von der Öl und Gas aus der Tiefsee fördernden Öl- und Gas-Industrie eingesetzt werden.

Im dargestellten Ausführungsbeispiel beherbergt der untere Container 14 vier derartige Unterwasserfahrzeuge 18, wobei jeweils zwei auf je einem von zwei horizontal verschieblichen Auszügen 20 gelagert sind. Alternativ kann jedes einzelne Unterwasserfahrzeug 18 auf einem eigenen Auszug gelagert sein. Bei ausreichender Größe des Containers 14 können auch mehrere Unterwasserfahrzeuge 18, beispielsweise zwei, hintereinander auf einem Auszug gelagert sein, so dass beispielsweise sechs bis acht Unterwasserfahrzeuge 18 im unteren Container 14 untergebracht sein können.

Die Container 12, 14 weisen stirnseitige doppelflügelige Türen auf, mit denen sie gegen Wind und Wetter geschützt verschlossen werden können. Aus Darstellungsgründen sind diese Türen jedoch nicht gezeichnet.

Der obere Container 12 ist mit dem unteren Container 14 über Eckbeschläge 22 lösbar verbunden. Der untere Container 14 befindet sich an Deck 24 eines nur teilweise dargestellten Mutterschiffs 26. Der untere Container 14 steht auf einem Containerstellplatz an Deck 24 des Mutterschiffs 26 und ist auf diesem Containerstellplatz ebenfalls mittels der Eckbeschläge lösbar gekoppelt. Ferner können an der rückwärtigen Stirnseite Zurrstangen vorgesehen sein, um ein seitliches Wegkippen der Container 12, 14 zu verhindern. Aufgrund der mechanischen Kopplung der Container 12, 14 miteinander sowie des unteren Containers 14 mit dem Mutterschiff 26 wird ein Umkippen der beiden Container 12, 14 auch bei Einwirkung von Kippmomenten oder seitlicher Kräfte verhindert.

Der obere Container 12 weist speziell ausgebildete Seitenwandelemente 28 auf, die mit dem übrigen Teil dieses Containers 12 lösbar befestigt sind. Diese Seitenwandelemente 28 können auf diese Weise entfernt werden, so dass der Kran 16, der im Bereich der stirnseitigen (nicht dargestellten) Tür angeordnet ist, freigestellt werden kann. Diese Seitenwandelemente 28 lassen sich daher leicht demontieren und wieder montieren. In analoger Weise weist der obere Container 12 ein oder mehrere Dachelemente 30 auf, die mit dem übrigen Teil dieses Containers 12 lösbar befestigt sind. Diese Dachelemente 30 können daher ebenfalls leicht entfernt und somit leicht demontiert und wieder montiert werden.

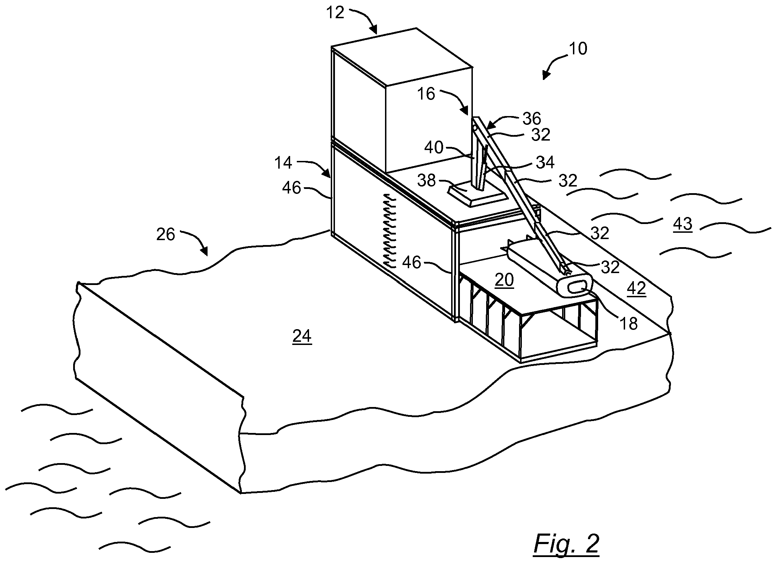

Fig. 2 zeigt den oberen Container 12 mit entfernten Seitenwandelementen 28 sowie entfernten Dachelementen 30. Die entfernten Seitenwandelemente 28 und Dachelemente 30 sind im hinteren, stehengebliebenen Teil des Containers 12 vorübergehend gelagert.

Fig. 2 zeigt ferner, dass der Auszug 20 des unteren Containers horizontal in Längsrichtung des unteren Containers 14 herausgezogen ist. Der Kran 16 hat mehrere seiner Teleskopelemente 32 ausgefahren und greift mit dem äußersten Teleskopelement 32 bzw. einem daran angebrachten Aufnahmeorgan das Unterwasserfahrzeug 18.

Der Kran 16 weist ferner eine Zylinder-Kolbeneinheit 34 auf, mit der der Kranausleger 36, der die Mehrzahl an Teleskopelementen 32 aufweist, in der Höhe verschwenkt werden kann. Ferner weist der Kran 16 Antriebsmittel auf, um eine auf einem Kranfuß 38 stehende Säule 40, an der der Kranausleger 36 gelenkig angebracht ist, um eine vertikale Achse verdrehen zu können. Das Ende des Kranauslegers 36 ist somit dreidimensional im Raum beweglich und erlaubt es, das Unterwasserfahrzeug von seiner Ruheposition auf dem Auszug 20 über eine Bordwand 42 hinweg in das umgebende Seewasser 43 auszusetzen.

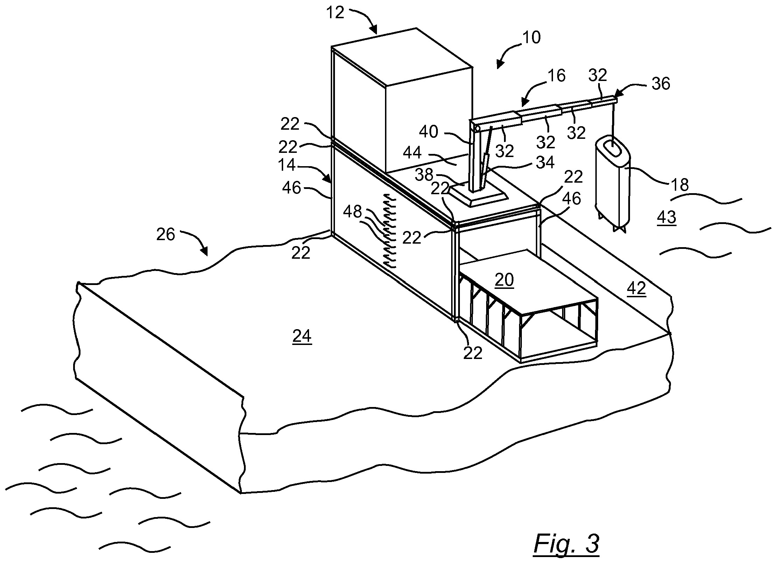

Fig. 3 zeigt den Vorgang des Aussetzens, bei dem der Kranausleger 36 im Wesentlichen maximal ausgefahren ist, um das Unterwasserfahrzeug 18 zu Wasser zu lassen.

Der obere Container weist eine verstärkte Bodenbaugruppe 44 auf, welche die beim Ausbringen und Bergen eines Unterwasserfahrzeugs 18 vom Kranfuß 38 auf die Bodenbaugruppe 44 ausgeübten Kräfte und Momente auf die bodenseitigen Eckbeschläge 22 des oberen Containers 12 und von diesen Eckbeschlägen auf die Eckbeschläge des unteren Containers 14 einleitet bzw. überträgt. Über Ecksäulen 46 des unteren Containers 14 werden diese Kräfte und Momente auf das Mutterschiff 26 übertragen.

Vorzugsweise handelt es sich bei den Containern 12, 14 um 20- oder 40-Fuß-Container, die auf herkömmlichen Trailern für Lastkraftwagen transportiert werden können.

Vorzugsweise weist der untere Container 14 an seiner Außenseite angebrachte Leitersprossen 48 auf. Über diese Leitersprossen 48 kann eine Bedienperson vom Deck 24 des Mutterschiffs 26 auf die Ebene des Krans 16, d.h. in den Bereich des oberen Containers 12, gelangen. Vorteilhafterweise steuert die Bedienperson den Ausbringvorgang bzw. den Bergevorgang von dem oberen Container 12 aus, da dank der erhöhten Position eine bessere Sicht insbesondere über die Bordwand 42 und damit eine erleichterte Kontrolle und Steuerung eines Ausbring- bzw. Bergevorgangs ermöglicht ist.

Der hintere Teil des oberen Containers 12, der nach dem Entfernen der Seitenwand- und Dachelemente 28, 30 verbleibt, weist vorteilhafterweise einen Kontrollraum für die Steuerung des Krans 16 und/oder der Mission des Unterwasserfahrzeugs 18 auf. Zusätzlich oder alternativ ist im unteren Container 14 ein Kontrollraum für die Steuerung der Mission des Unterwasserfahrzeugs 18 hergerichtet.

Das erfindungsgemäße System 10 zweier übereinander angeordneter Container 12, 14 erlaubt eine sehr Platz sparende Anordnung eines Systems zum Ausbringen und Bergen von Unterwasserfahrzeugen 18 an Bord eines Mutterschiffs 26. Insbesondere ist dieses System vollständig transportabel und bedarf keines fest an Deck eines Schiffes installierten Krans. Dieses System kann auf jedem Schiff eingesetzt werden, welches an Deck über einen Aufnahmeplatz für einen Container verfügt. Für Missionen mit Unterwasserfahrzeugen kann dank der Erfindung somit nahezu jedes beliebige Schiff eingesetzt werden, wodurch ein kostengünstiges Schiff ausgewählt werden kann.

Darüber hinaus bedarf es auch lediglich einer einmaligen Schulung des Bedienungspersonals, da das Bedienpersonal immer mit denselben Gerätschaften, einschließlich des Krans, arbeitet und daher nur mit diesen Gerätschaften vertraut gemacht werden muss.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. System zum Ausbringen und Bergen eines Unterwasserfahrzeugs (18),
das einen Kran (16), zwei Container (12, 14) und einen Lagerplatz für wenigstens ein Unterwasserfahrzeug (18) umfasst,
**dadurch gekennzeichnet, dass**
der Kran (16) am Boden des ersten Containers (12) befestigt ist und der Lagerplatz in dem zweiten Container (14) bereitgestellt ist, wobei der erste Container (12) während eines Ausbringvorgangs oder eines Bergevorgangs auf dem zweiten Container (14) angeordnet ist.

2. System nach Anspruch 1,
**dadurch gekennzeichnet, dass**
der erste Container (12) Seitenwandelemente (28) aufweist, die an dem übrigen Teil des ersten Containers (12) lösbar befestigt und dadurch demontierbar und wieder montierbar sind.

3. System nach Anspruch 2,
**dadurch gekennzeichnet, dass**
der erste Container (12) wenigstens ein Dachelement (30) aufweist, das an dem übrigen Teil des ersten Containers (12) lösbar befestigt und dadurch demontierbar und wieder montierbar ist.

4. System nach einem der vorhergehenden Ansprüche,
**dadurch gekennzeichnet, dass** der Kran (16) einen Ausleger (36) mit mehreren teleskopartig miteinander zusammenwirkenden Teleskopelementen (32) aufweist.

5. System nach einem der Ansprüche 2 bis 4,
**dadurch gekennzeichnet, dass**
der Teil des ersten Containers (12), der nach dem Demontieren der demontierbaren Seitenwand- und Dachelemente (28, 30), zumindest teilweise umschlossen verbleibt, als Lagerraum für die demontierten Seitenwand- und Dachelemente (28, 30) und/oder als Kontrollraum für die Steuerung des Krans (36) und/oder einer Mission eines Unterwasserfahrzeugs (18) hergerichtet ist.

6. System nach einem der vorhergehenden Ansprüche,
**dadurch gekennzeichnet, dass**
am zweiten Container (14) außen angebrachte Leitersprossen (48) vorgesehen sind.

7. System nach einem der vorhergehenden Ansprüche,
**dadurch gekennzeichnet, dass**
der zweite Container (14) einen oder mehrere in Längsrichtung des zweiten Containers horizontal verschiebliche Auszüge (20) mit je einer Aufnahmeeinrichtung zum Aufnehmen eines Unterwasserfahrzeugs (18) aufweist.

8. System nach Anspruch 7,
**dadurch gekennzeichnet, dass**
wenigstens zwei Auszüge (20) übereinander angeordnet sind.

9. System nach einem der vorherigen Ansprüche,
**dadurch gekennzeichnet, dass**
der zweite Container (14) einen ersten Bereich zur Aufnahme des einen oder mehrerer Unterwasserfahrzeuge (18), der benachbart zu einer stirnseitigen, vorzugsweise doppelflügeligen, Containertür angeordnet ist, sowie einen zweiten Bereich aufweist, der zur Lagerung von Zubehör und Austauschteilen des oder der Unterwasserfahrzeuge (18) hergerichtet ist, insbesondere für die Lagerung von Antriebsbatterien, Batterieladegerätschaften und Datenspeicherbaugruppen.

10. System nach einem der vorherigen Ansprüche,
**dadurch gekennzeichnet, dass**
der erste und der zweite Container (12, 14) als Standardcontainer mit Eckbeschlägen ausgebildete Seecontainer sind.

11. System nach Anspruch 10,
**dadurch gekennzeichnet, dass**
der erste Container (12) eine derart verstärkte Bodenbaugruppe (44) aufweist, welche die beim Ausbringen und Bergen eines Unterwasserfahrzeugs (18) vom Fuß (38) des Krans (16) auf die Bodenbaugruppe (44) ausgeübten Kräfte und Momente auf die bodenseitigen Eckbeschläge (22) des ersten Containers (12) überträgt.

## Claims

1. A system for launching and recovering an underwater vehicle (18), which system comprises a crane (16), two containers (12, 14) and a storage location for at least one underwater vehicle (18),
**characterized in that**
the crane (16) is attached to the bottom of the first container (12) and the storage location is provided in the second container (14), said first container (12) being arranged on the second container (14) during an operation of launching or an operation of recovering.

2. A system according to claim 1,
**characterized in that**
the first container (12) comprises side wall members (28), said side wall members (28) being releasably attached to the remaining part of the first container (12), thereby being detachable and mountable again.

3. A system according to claim 2,
**characterized in that**
the first container (12) comprises at least one roof member (30), said roof member (30) being releasably attached to the remaining part of the first container (12), thereby being detachable and mountable again.

4. A system according to one of the preceding claims,
**characterized in that**
the crane (16) comprises an extension arm (36) with a plurality of telescope elements (32), which telescope elements coact telescope-like.

5. A system according to one of the claims 2 to 4,
**characterized in that**
the part of the first container (12), which part remains at least partially surrounded after detaching the detachable side wall members (28) and roof members (30), is arranged as a storage room for the detached side wall members (28) and roof members (30) and/or or as a control room for the control of the crane (16) and/or as a control room for the control of a mission of an underwater vehicle (18).

6. A system according to one of the preceding claims,
**characterized in that**
ladder spokes (48) are provided, which ladder spokes (48) are placed at the outside of the second container (14).

7. A system according to one of the preceding claims,
**characterized in that**
the second container (14) comprises one or more drawer mechanisms (20) with a receiving device each for receiving an underwater vehicle (18), which drawer mechanisms (20) are relocatable horizontally in the second container's longitudinal direction.

8. A system according to claim 7,
**characterized in that**
at least two drawer mechanisms (20) are arranged one above the other.

9. A system according to one of the preceding claims,
**characterized in that**
the second container (14) comprises a first region for receiving the one or several underwater vehicles (18), said first region being arranged contiguous to a front end container door, said container door preferably being a double-wing container door, and the second container (14) comprises a second region, said second region being arranged for storage of accessories and alteration parts of the underwater vehicle(s) (18), particularly for the storage of drive batteries, battery charging devices and data memory components.

10. A system according to one of the preceding claims,
**characterized in that**
the first and the second container (12, 14) are maritime containers being designed as standard containers with corner fittings.

11. A system according to claim 10,
**characterized in that**
the first container (12) comprises a reinforced bottom assembly (44), which bottom assembly (44) transmits the forces and moments which are exerted from the base (38) of the crane (16) on the bottom assembly (44) to the bottom-side corner fittings (22) of the first container (12).

## Revendications

1. Système de mise en œuvre et de récupération d'un engin submersible (18), qui comprend une grue (16), deux conteneurs (12, 14) et un emplacement d'entreposage pour au moins un engin submersible (18),
**caractérisé en ce que**
la grue (16) est fixée au fond du premier conteneur (12) et
l'emplacement d'entreposage est fourni dans le deuxième conteneur (14), sachant que le premier conteneur (12) est disposé sur le deuxième conteneur (14) pendant une opération de mis en œuvre ou une opération de récupération.

2. Système selon la revendication 1,
**caractérisé en ce que**
le premier conteneur (12) comporte des éléments de paroi latéraux (28), qui sont fixés de façon amovible à la partie restante du premier conteneur (12) et sont de ce fait démontables et remontables.

3. Système selon la revendication 2,
**caractérisé en ce que**
le premier conteneur (12) comporte au moins un élément de toit (30) qui est fixé de façon amovible à la partie restante du premier conteneur (12) et est de ce fait démontable et remontable.

4. Système selon l'une quelconque des revendications précédentes,
**caractérisé en ce que**
la grue (16) comporte une flèche (36) avec plusieurs éléments télescopiques (32) coopérant entre eux de façon télescopique.

5. Système selon l'une quelconque des revendications 2 à 4,
**caractérisé en ce que**
la partie du premier conteneur (12), qui reste entourée au moins en partie après le démontage des éléments de paroi latéraux et de toit (28, 30) démontables est arrangée en tant qu'espace d'entreposage pour les éléments de paroi latéraux et de toit démontés (28, 30) et/ou comme local de contrôle pour le pilotage de la grue (36) et/ou d'une mission d'un engin submersible (18).

6. Système selon l'une quelconque des revendications précédentes,
**caractérisé en ce que**
des échelons montés extérieurement (48) sur le deuxième conteneur (14) sont prévus.

7. Système selon l'une quelconque des revendications précédentes,
**caractérisé en ce que**
le deuxième conteneur (14) comporte une ou plusieurs extensions (20) horizontalement mobiles dans la direction longitudinale du deuxième conteneur avec chacune un système de réception pour recevoir un engin submersible (18).

8. Système selon la revendication 7,
**caractérisé en ce qu'**
au moins deux extensions (20) sont disposées l'une sur l'autre.

9. Système selon l'une quelconque des revendications précédentes,
**caractérisé en ce que**
le deuxième conteneur (14) comporte une première zone pour recevoir un ou plusieurs engins submersibles (18), qui est disposée proche d'une porte de conteneur frontale, de préférence à deux battants, ainsi qu'une deuxième zone, qui est arrangée pour l'entreposage d'accessoires et de pièces de rechange du ou des engins submersibles (18), notamment pour l'entreposage de batteries d'entraînement, d'appareillages de charge de batterie et de composants de mémorisation de données.

10. Système selon l'une quelconque des revendications précédentes,
**caractérisé en ce que**
le premier et le deuxième conteneur (12, 14) sont des conteneurs maritimes constitués comme conteneurs standard avec des ferrures d'angle.

11. Système selon la revendication 10,
**caractérisé en ce que**
le premier conteneur (12) comporte un composant de fond renforcé (44) de telle manière qu'il transmet aux ferrures angulaires (22) côté fond du premier conteneur (12) lors de la mise en œuvre et de la récupération d'un engin submersible (18) les forces et les couples exercés depuis le pied (38) de la grue (16) sur le composant de fond (44).
